# EUROPEAN PATENT SPECIFICATION

(11) **EP 0 432 262 B1**
(45) Date of publication and mention of the grant of the patent: **12.07.1995**
(21) Application number: 88903366.8
(22) Date of filing: 08.04.1988
(51) Int. Cl.: G01K 11/20

(54) **THERMOMETER**
THERMOMETER
THERMOMETRE

(30) Priority: 09.04.1987 JP 87731/87
(43) Date of publication of application: 19.06.1991
(73) Proprietor: TERUMO KABUSHIKI KAISHA, Tokyo 151 (JP)
(72) Inventor: NAKAMURA, Hideki, c/o Terumo Kabushiki Kaisha, Fuji-shi, Shizuoka 417 (JP)
(74) Representative: Gillard, Marie-Louise
(86) International application number: JP8800361
(87) International publication number: WO8808123

(56) References cited:
- CA-A- 1 021 934
- GB-A- 1 480 583
- JP-A- 5 830 628
- JP-A-53 116 882
- US-A- 4 245 507
- US-A- 4 455 741
- US-A- 4 542 987
- PATENT ABSTRACTS OF JAPAN vol. 7, no. 6 (P-167)(1151) January 11, 1983 ; & JP-A-57 166 528
- PATENT ABSTRACTS OF JAPAN vol. 5, no. 49 (C-49) April 8, 1981 ; & JP-A-564 680

## Description

### TECHNICAL FIELD

This invention relates to a temperature measuring device for measuring temperature by utilizing a light-emitting element which exhibits temperature dependence.

### BACKGROUND ART

In general, methods of measuring temperature in the prior art rely upon measurement of an electric signal from a thermistor (in which a change in electrical resistance due to temperature is measured), a thermocouple (in which a thermalelectromotive force produced between different metals is measured), or the like. In any case, if the object whose temperature is being measured is a dielectric, an electrolytic solution or the like, the sensor that measures the temperature must be coated with an insulator. Consequently, there is a limit upon the extent to which the device can be miniaturized and there is a limit upon the kinds of objects that can be measured. A further disadvantage is that external noise due to electromagnetic induction tends to occur.

Methods of measuring temperature optically include a method in which the attenuation characteristic of fluorescence with respect to temperature is measured, the fluorescence being emitting by a fluorescent body comprising an inorganic compound such as a rare earth metal, and a method in which the degree of shift in a fluorescence spectrum due to temperature is detected. However, the apparatus in either case is complicated and costly.

Japanese Patent Application Laid-Open No. 58-182520 discloses a method of measuring temperature by sensing the intensity of fluorescence, but a specific technique involving the type of fluorescent body or the temperature characteristic is not indicated and no solution to the problems of the prior art is given. Moreover, since the relation between temperature and light-emitting intensity is not linear, a large error is a problem.

US patent 4,542,987 describes a method and an apparatus for measuring temperature and for generating optical signals related to temperature.

Light from a fiber optic is directed to a material whose fluorescent response varies with ambient temperature. The same fiber optic delivering the excitation beam also collects a portion of the fluorescent emission for analysis.

### DISCLOSURE OF THE INVENTION

The present invention has been devised in view of the aforementioned prior art and seeks to provide a living body temperature sensor which is highly safe, highly reliable and free of cost-related problems.

Specifically, the living body temperature measuring device of the present invention comprises a light-emitting element consisting in a polypyridine metal complex for emitting light of an intensity dependent upon temperature when irradiated with light, irradiating means for irradiating the light-emitting element with stabilized light, light-receiving means for receiving light emitted light, light-receiving means for receiving light emitted by the irradiated light-emitting element, converting means for making a conversion into a temperature value on the basis of the intensity of the emitted light received by the light-receiving means, and output means for outputting temperature information resulting from the conversion.

According to the invention the light-emitting element includes essentially tris (2, 2′-bipyridine) ruthenium (II) chloride - by which living body temperature measurement is made possible and with good precision - and is fixed by using a polymer.

Further, in accordance with an embodiment of the invention, the light produced by the irradiating means preferably possesses at least a wavelength which excites the light-emitting element. This will make it possible for the light-emitting element to be made to emit light highly efficiently.

Further, in accordance with an embodiment of the invention, the light-receiving means preferably includes spectral diffraction means for passing only the light emitted by the light-emitting element, whereby it is possible to eliminate the irradiating light produced by the irradiating means.

Further, in accordance with an embodiment of the invention, the light received by the light-receiving means has a wavelength in the vicinity of the peak position of the light emitted by the light-emitting element. This makes it possible to receive light having an intensity of a certain magnitude.

Further, according to an embodiment of the invention, it is preferred that an optical fiber be used as a medium through which the light-emitting element is irradiated by the irradiating means. This makes it possible to irradiate the light-emitting element with light from a remote location.

In this case, the light-emitting element is fixed to an end of the optical fiber, thereby making it possible to irradiate the light-emitting element in a sure manner.

Further, according to an embodiment of the invention, it is preferred that an optical fiber be used as a medium through which the light emitted by the light-emitting element is received by the light-receiving means. This makes it possible to receive light from a remote light-emitting element.

In this case, it is preferred that the light-emitting element be fixed to an end of the optical fiber, thereby making it possible to receive the emitted light from the light-emitting element in a sure manner.

Further, according to an embodiment of the invention, the light-emitting element is fixed to one end of the optical fiber, the irradiating means irradiates the light-emitting element via the optical fiber, and the light-receiving means receives the emitted light via the optical fiber.

Further, according to an embodiment of the invention, the converting means preferably makes the conversion into a temperature value based on a look-up table. This makes it possible to effect a conversion into temperature information through a simple arrangement.

### BRIEF DESCRIPTION OF THE DRAWINGS

Figs. 1 through 4 are views illustrating various method of fixing a polypyridine metal complex to an optical fiber;
Fig. 5 is a block diagram of an apparatus for measuring the intensity of emitted light from a light-emitting element used in an embodiment;
Fig. 6 is a block diagram of a temperature measuring device in the embodiment;
Fig. 7 is a graph showing the relation between temperature and emitted light intensity according to the embodiment; and
Fig. 8 is a graph showing the relation between temperature and emitted light intensity according to another embodiment.

### BEST MODE FOR CARRYING OUT THE INVENTION

Embodiments of the present invention will now be described in detail with reference to the accompanying drawings.

The principle of the present invention will be described first.

By way of example, a polypyridine ruthenium (II) complex generally has an absorption spectrum near a wavelength of 450 nm and is excited by light having a wavelength in this vicinity (or lower). When the polypyridine ruthenium (II) complex returns from the excited state to a ground state, it emits light, at a certain light-emitting efficiency, having a peak in the vicinity of a wavelength of 600 nm. (Strictly speaking, phosphorescence and not fluorescence occupies the greater portion of this light.) Moreover, the inventor has confirmed that the light-emitting efficiency varies linearly with a change in temperature. In other words, the intensity of the emitted light is proportional to the light-emitting efficiency if the intensity of the excitation light is the same. This means that temperature can be sensed by measuring the intensity of the emitted light.

By contrast, organic fluorescent substances, e.g., many so-called polynuclear aromatic compounds such as pyrene, anthracene or fluorescein, exhibit a decrease in light-emitting efficiency due to temperature. However, this tendency diminishes sharply at a certain temperature so that these substances are not practical for use in measuring temperature. An inorganic fluorescent body comprising a rare earth metal compound is high in cost, requires special care in handling and in unsuitable for use at room temperatures.

In the temperature measuring device of the present invention, the abovementioned polypyridine metal complex is used for the portion that senses temperature, and the metal complex is fixed to the distal end of an optical fiber. This makes possible remote measurement of very small areas and also makes it possible to minimize optical loss due to reflection and diffraction of the excitation light and emitted light at the interface between different types of substances. However, depending upon the form of the region measured, the optical fiber is not always required and the invention is not limited to an apparatus employing the optical fiber.

Next, various methods of fixing the polypyridine metal complex according to the invention to an optical fiber will be considered. Examples of the fixing requirements are as follows :
(1) If the object undergoing measurement is a liquid, the fixed metal complex should not dissolve into the liquid (dissolution will cause conversion of the emitted light intensity and make stable measurement difficult).
(2) A non-reversible change due to a chemical reaction should not arise between the device and the substance whose temperature is being sensed.

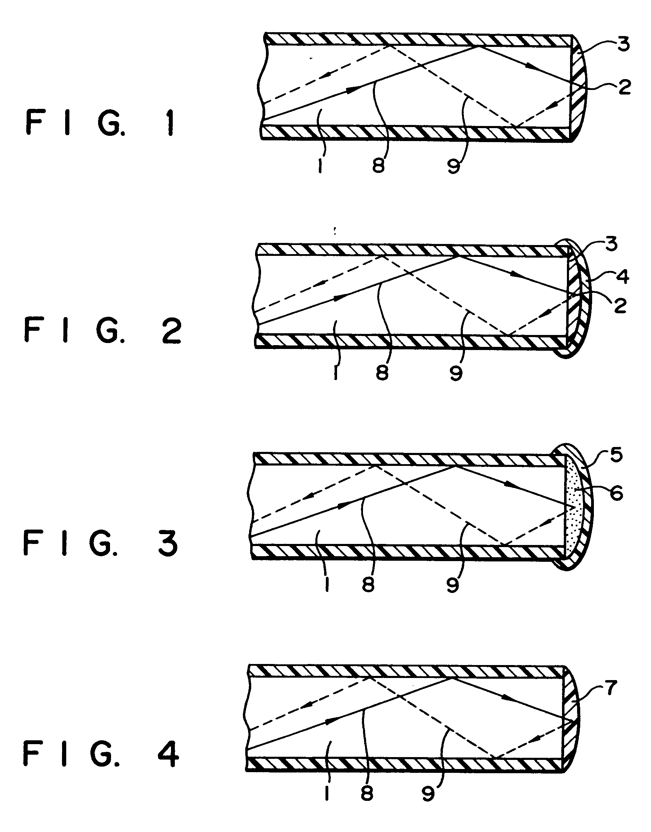

Figs. 1 through 4 illustrate various examples of fixing the polypyridine metal complex.

Fig. 1 shows an example in which a polypyridine metal complex 2 is dissolved or dispersed in a polymer 3 thereby to be fixed to the tip of an optical fiber serving as a supporting member for the metal complex. This represents the ideal fixation method.

In this case, there are many examples which can be used as the polymer 3. For instance, general-purpose plastics which are widely available can be used. Examples are low-density polyethylene, polypropylene, polyvinyl chloride, ethylene-vinylacetate copolymer, polystyrene, polymethyl methacrylate, silicone resin and polyurethane. It is also permissible to use plastics obtained by plasticizing these polymers with a plasticizer. Though the support member is not particularly required, it is preferred that an optical fiber be employed when the support member is used. Further, as shown in Fig. 2, it is permissible to affix a suitable protective film 4 or the like to the outer side (the side that comes into contact with the object whose temperature is to be measured) of the polymer 3. Also, as shown in Fig. 3, it is possible to adopt a capsule configuration enclosing a gel or solution 6 of the polypyridine metal complex, in which case the gel, aqueous solution, etc., of the polypyridine metal complex is sealed in by a suitable film 5 and fixed to the end face of an optical fiber. Here a gel refers to a semisolid and includes an aqueous polymer such as gelatin, polyacrylamide and polyacrylic sodium.

A third method is to chemically or physically adsorb the polypyridine metal complex on an adsorbing body 7, as shown in Fig. 4. Examples of the adsorbing body that can be mentioned include, porous polymers, various ion-exchange resins, and natural substances such as many sugars and proteins. Though any of these adsorbing bodies can be used, employing an anion-exchange resin or chelate adsorbent makes it possible to achieve more stable fixation.

Thus, by way of example, a polypyridine metal complex is fixed to one end of an optical fiber, the other end of the optical fiber is irradiated with light (excitation light) 8 obtained by spectrally refracting light from a suitable source (e.g., a xenon lamp or ultra high-pressure mercury lamp) into an excitation spectral wavelength region (ordinarily less than 500 nm), and guiding this excitation light through the optical fiber to the portion at which the polypyridine metal complex is fixed. When this is done, the polypyridine metal complex emits reddish orange light 9 the intensity of which is commensurate with temperature. The emitted light propagates through the interior of the optical fiber and has its excitation light component separated by a suitable spectroscope such as an optical filter or monochrometer. The light is then converted into an electric signal by a light-receiving element (a photomultiplier tube or the like) so that the intensity of the light can be measured. It should be noted that the excitation light in this case can be light which is continuous in time or light which is pulsating. Also, the optical fiber which guides the emitted light need not be the same as that which guides the excitation light.

It has been found that the temperature measuring device of the embodiment based on the foregoing principle exhibits excellent reproducibility and is capable of performing highly accurate measurement even in the vicinity of room temperature.

Specific examples of the temperature measuring device of the embodiment will now be described.

### <Example 1>

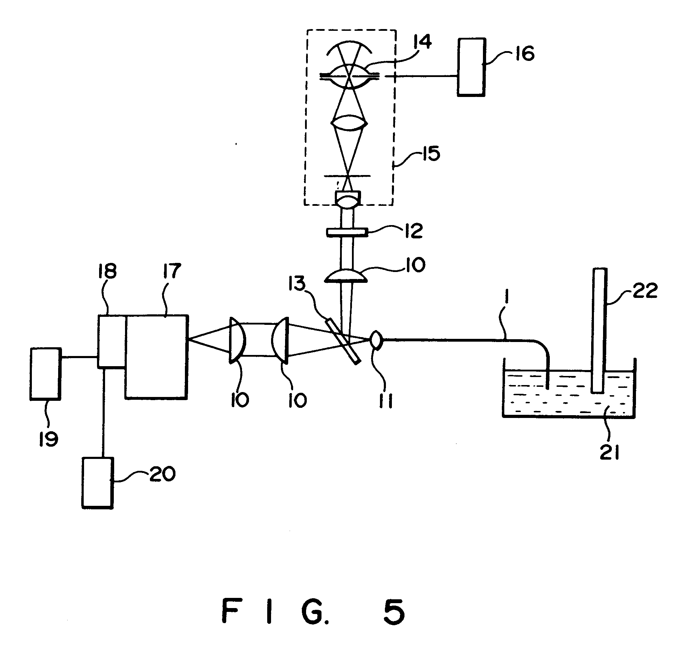

Dissolved in 20 ml of dimethyl formamide (a reagent manufactured by Kanto Chemical Co., Inc.) were 0.01g of tris(2,2′-bipyridene) ruthenium (II) chloride (a reagent manufactured by Aldrich Chemical Co., Inc.) and 1g of polymethyl methacrylate (a reagent manufactured by Aldrich Chemical Co., Inc., having a molecular weight of 12,000). One end of a 2 m length of plastic optical fiber (SK-10, manufactured by Mitsubishi Rayon Co., Ltd., having an outer diameter of 0.25 mm) was dipped in the resulting solution, removed after about 10 sec and then dried under reduced pressure. This made it possible to fix the tris(2,2′-bipyridine) ruthenium (II) chloride to the tip of the optical fiber using the polymethyl methacrylate. Thus, a temperature probe having the form shown in Fig. 1 was manufactured. An apparatus of the kind shown in Fig. 5 was constructed using the temperature probe thus produced and equipment constituting an optical system. The graphs have a vertical axis along which the relative intensity of emitted light is plotted, with the relative intensity of received light at 25°C being taken as "10".

In Fig. 5, numeral 1 denotes the optical fiber having the above-described temperature probe formed on its distal end, which is immersed in water in a isothermal water bath 21. Numeral 22 denotes a mercury thermometer for measuring the temperature of the water in the isothermal water bath 21.

When a ultra high-pressure mercury lamp 14 in a parallel luminous flux irradiating device 15 is ignited by a starter 16, the light passes through an interference filter 12 and a plano-convex lens 10 and is reflected by a dichroic mirror 13. The reflected light passes through an objective lens 11 for a microscope. As a result, the temperature probe situated at the terminal of the optical fiber 1 is irradiated with excitation light having a center wavelength of 435 nm. In response to this irradiation, the temperature probe [tris(2,2′-bipyridine) ruthenium (II) chloride] is caused to emit light. The emitted light passes through the objective lens 11 and dichroic mirror 13 and is condensed on a monochrometer 17 by two plano-convex lenses 10. Only monochromatic light having a wavelength of 620 nm is transmitted by the monochrometer 17. This light is converted into an electric signal by a photomultiplier tube 18. The electric signal is amplified by an amplifier 20, thereby making it possible to measure the intensity of the 620 nm wavelength light emitted by the [tris(2,2′-bipyridine) ruthenium (II) chloride]. Numeral 19 denotes a power supply for the photoelectron multiplier tube 18.

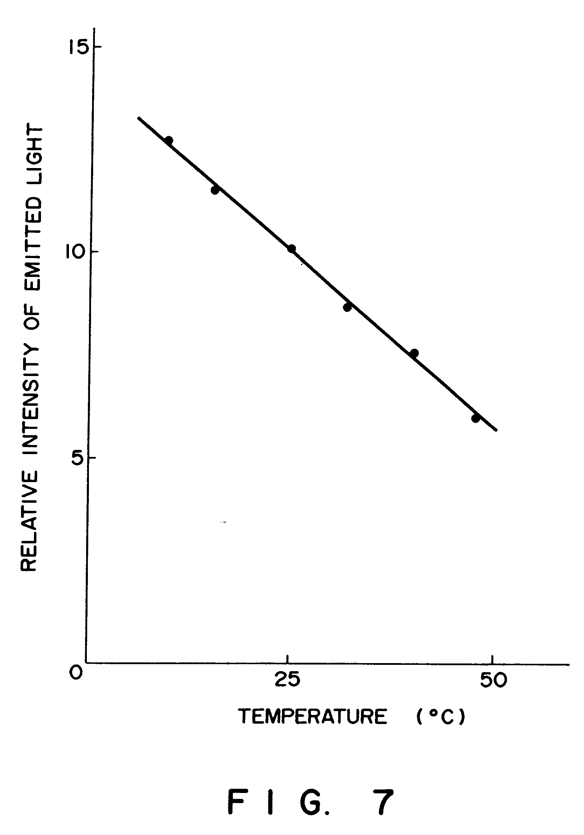

The relationship between the light intensity measured by this apparatus and the temperature of the water in the isothermal water bath 21 (namely the value indicated by the mercury thermometer 22) is as shown in Fig. 7. This shows that an excellent linear relationship with respect to temperature was obtained. Accordingly, this makes it possible to subsequently measure the temperature of an object from this relationship between temperature and light intensity.

The three plano-convex lenses 10 in Fig. 5 were model numbers 01LPX277 manufactured by Melles Griot, the objective lens 11 for the microscope was manufactured by Olympus K.K., the interference filter 11 was model number BPF-4 (having a center wavelength of 435 nm) manufactured by Vacuum Optics Corp. of Japan, and the dichroic mirror 13 was a blue reflective mirror manufactured by Vacuum Optics Corp. of Japan. A ultra high-pressure mercury lamp USH-102D manufactured by Ushio Inc. was used as the light source, and model numbers UI-lOOQ, HB-10102AA, both manufactured by Ushio Inc., were used as the parallel luminous flux irradiating device 15 and ultra high-frequency mercury lamp starter 16, respectively. A model number H-20V manufactured by Jobin Ybon was used as the monochrometer 17, and model numbers R1477, C665, both manufactured by Hamamatsu Photonics K. K., were used as the photomultiplier tube 18 and high-voltage power supply 19 for this photomultiplier tube, respectively. A digital electrometer FC7401, manufactured by Iwatsu Electric Co. Ltd. was used as the amplifier 20.

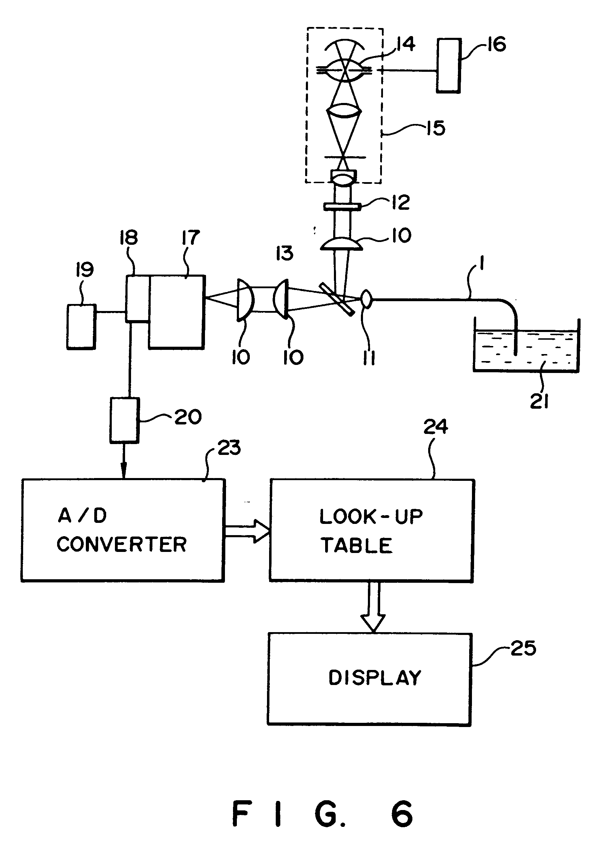

An apparatus of the kind shown in Fig. 6.was constructed in order to actually measure temperature using this probe.

A description of the elements at numbers 1 through 20 in Fig. 6 is omitted in order to avoid redundancy.

In Fig. 6, numeral 23 denotes an A/D converter for converting an analog signal from the amplifier 20 into digital data, and numeral 24 denotes a look-up table for outputting data corresponding to the digital data.

The look-up table 24 comprises a ROM to which the data from the A/D converter 23 is inputted as an address so that the ROM may output the corresponding data. It goes without saying that the relationship between the inputted address and the outputted data is the relationship shown in Fig. 7. The digital data (temperature information) resulting from the conversion performed by the look-up table 24 is latched in an LCD driver of a display unit 25 and displayed.

Though the description is out of sequence, a linear equation stored in the look-up table is determined by the method of least squares.

### <Example 2>

The present invention is not limited to the temperature probe described above. For example, one end of an optical fiber the same as that used in Example 1 was dipped into a 5% alcohol solution (No. 27,470-4, a reagent manufactured by Aldrich Chemical Co., Inc.) of Nafion 107, which is a.cation-exchange resin, for about 10 sec, followed by drying. Only a length of about 2 mm of the tip of the optical fiber was thus coated with the cation-exchange resin. The coated portion was then dipped in a 20 mM aqueous solution of tris(2,2′-bipyridine) ruthenium (II) chloride for 1 min, followed by washing with water.

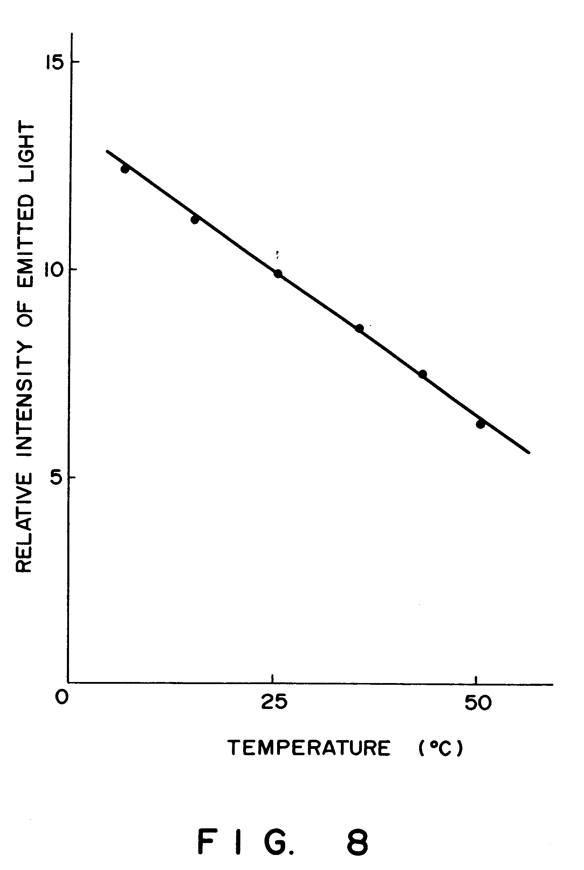

An excellent linear relationship of the kind shown in Fig. 8 was obtained when temperature and the intensity of emitted light were determined in the same manner as in Example 1 using the probe (which corresponds to Fig. 2) having the tris(2,2′-bipyridine) ruthenium (II) cation fixed thereto.

In accordance with the present embodiment of the invention as described above, there can be obtained a temperature sensor which is highly safe and reliable and free of cost-related problems. In particular, since a relationship is obtained in which the intensity of emitted light in the room-temperature region maintains a linear state, the sensor is ideal for measuring body temperature or the temperature of blood at any in vivo location.

By using the optical fiber as a medium for optically irradiating the polypyridine metal complex serving as the light-emitting element and as a medium for inputting the emitted light, it becomes possible to perform measurement accurately and remotely even in locations where there is a great amount of electromagnetically induced noise.

Further, by using a single optical fiber for optical irradiation and for inputting emitted light, it becomes possible to measure temperature with facility even when the object to be measured is concealed.

In the present embodiment, it is described that a mercury lamp is used as a light source for irradiating the polypyridine metal complex. However, since a light source having a sufficient optical intensity even below a wavelength of about 500 nm is advantageous, it is permissible to use a xenon lamp, a tungsten lamp or the like. In addition, though a photmultiplier tube is used in the present embodiment as means for sensing temperature, it is permissible to use a photodiode or the like.

## Claims

1. A living body temperature measuring device comprising :
a light-emitting element (2, 6 or 7) for emitting light of an intensity dependent upon temperature when irradiated with light;
irradiating means (8) for irradiating said light-emitting element (2, 6 or 7) with stabilized light;
light-receiving means (18) for receiving light emitted by the irradiated light-emitting element (2,6 or 7);
converting means (23) for making a conversion into a temperature value on the basis of the intensity of the emitted light received by said light-receiving means (18), and
output means for outputting temperature information resulting from the conversion,
characterized in that the light-emitting element (2, 6 or 7) consists of the following polypyridine metal complex: tris (2,2′-bipyridine) ruthenium (II) chloride and is fixed by using a polymer.

2. A living body temperature measuring device according to claim 1, characterized in that the light produced by said irradiating means (8) preferably at least possesses wavelenght which excites said light-emitting element (2, 6 or 7).

3. A living body temperature measuring device according to one of claims 1 or 2, characterized in that said light-receiving means (18) includes spectral diffraction means for passing only the light emitted by said light-emitting element (2, 6 or 7).

4. A living body temperature measuring device according to anyone of claims 1 to 3 characterized in that the light received by said light-receiving means (18) has a wavelength spectrum in the vicinity of the peak position of the light emitted by said light-emitting element (2,6 or 7).

5. A living body temperature measuring device according to anyone of claims 1 to 4, characterized in that an optical fiber (1) is used as a medium through which said light-emitting element (2, 6 or 7) is irriadiated by said irradiating means (8).

6. A temperature measuring device according to claim 5, characterized in that said light-emitting element (2, 6 or 7) is fixed to an end of said optical fiber (1).

7. A temperature measuring device according to anyone of claims 1 to 6 characterized in that an optical fiber (1) is used as a medium through which the light emitted by said light-emitting element (2, 6 or 7) is received by said light-receiving means (18).

8. A temperature measuring device according to claim 7, characterized in that said light-emitting element (2, 6 or 7) is fixed to an end of an optical fiber (1).

9. A temperature measuring device according to anyone of claims 1 to 8 characterized in that said light-emitting element (2, 6 or 7) is fixed to one end of an optical fiber (1), said irradiating means (8) irradiates said light-emitting element (2, 6 or 7) via said optical fiber (1), and said light-receiving means (18) receives the emitted light via said optical fiber (1).

10. A temperature measuring device according to anyone of claim 1 to 9, characterized in that said converting means (23) makes the conversion into a temperature value based on a look-up table (24).

11. A temperature measuring device according to anyone of claims 1 to 10, characterized in that it further comprises a reaction resistant film (4 or 5) sealing the light-emitting element (2, 6 or 7) from the environment; said light-emitting element (2, 6 or 7) being inserted into said environment to effect temperature measurement.

## Patentansprüche

1. Eine Vorrichtung zum Temperaturmessen am lebenden Körper, mit:
einem lichtemittierenden Element (2,6 oder 7) zum Emittieren von Licht einer temperaturabhängigen Intensität, wenn mit Licht bestrahlt wird;
Bestrahlungsmittel (8) zum Bestrahlen des besagten lichtemittierenden Elements (2, 6 oder 7) mit konstantem Licht;
lichtempfangendes Mittel (18) zur Aufnahme von durch das bestrahlte lichtemittierende Element (2, 6 oder 7) emittiertem Licht;
Umwandlungsmittel (23) zur Umwandlung in einen Temperaturwert auf der Basis der Intensität des durch das lichtaufnehmende Mittel (18) erhaltene emittierte Licht, und
Ausgabeeinheit zur Ausgabe von durch die Umwandlung resultierender Temperaturinformation,
dadurch gekennzeichnet, daß
das lichtemittierende Element (2, 6 oder 7) aus dem folgenden Polypyridinmetallkomplex: Tris(2,2′-bipyridin)ruthenium-(II)-chlorid besteht und durch Verwendung eines Polymers fixiert wird.

2. Eine Vorrichtung zum Temperaturmessen am lebenden Körper gemäß Anspruch 1, dadurch gekennzeichnet, daß das Licht durch besagtes Bestrahlungsmittel (8) erzeugt wird, vorzugsweise mindestens die Wellenlänge besitzt, welches besagtes lichtemittierende Element (2, 6 oder 7) anregt.

3. Eine Vorrichtung zum Temperaturmessen am lebenden Körper gemäß einem der Ansprüche 1 oder 2, dadurch gekennzeichnet, daß das besagte lichtempfangende Mittel Spektraldiffraktionsmittel (18) zum Durchlassen nur von Licht von besagtem lichtemittierenden Element (2, 6 oder 7) enthalten.

4. Eine Vorrichtung zum Temperaturmessen am lebenden Körper gemäß einem der Ansprüche 1 bis 3, dadurch gekennzeichnet, daß das Licht, das durch besagtes lichtempfangende Mittel (18) aufgenommen wird, ein Wellenlängenspektrum in der Nachbarschaft der Peak-Position des durch besagtes lichtemittierende Element (2, 6 oder 7) emittierten Lichtes hat.

5. Eine Vorrichtung zum Temperaturmessen am lebenden Körper gemäß einem der Ansprüche 1 bis 4, dadurch gekennzeichnet, daß eine optische Faser (1) als ein Medium verwendet wird, durch welches besagtes lichtemittierende Element (2,6 oder 7) mit besagtem Bestrahlungsmittel (8) bestrahlt wird.

6. Eine Vorrichtung zum Temperaturmessen gemäß Anspruch 5, dadurch gekennzeichnet, daß besagtes lichtemittierende Element (2, 6 oder 7) an einem Ende einer optischen Faser befestigt wird.

7. Eine Vorrichtung zum Temperaturmessen gemäß einem der Ansprüche 1 bis 6, dadurch gekennzeichnet, daß eine optische Faser als ein Medium verwendet wird, durch welches das durch besagtes lichtemittierende Element (2, 6, oder 7) emittierte Licht durch besagtes lichtempfangende Mittel (18) aufgenommen wird.

8. Eine Vorrichtung zum Temperaturmessen gemäß Anspruch 7, dadurch gekennzeichnet, daß besagtes lichtemittierende Element (2, 6 oder 7) an einem Ende einer optischen Faser (1) befestigt ist.

9. Eine Vorrichtung zum Temperaturmessen gemäß einem der Ansprüche 1 bis 8, dadurch gekennzeichnet, daß besagtes lichtemittierende Element (2, 6 oder 7) an einem Ende einer optischen Faser (1) befestigt ist, besagtes Bestrahlungsmittel (8) besagtes lichtemittierende Element (2, 6 oder 7) über besagte optische Faser (1) bestrahlt, und besagtes lichtempfangende Mittel (18) das emittierte Licht über besagte optische Faser (1) empfängt.

10. Eine Vorrichtung zum Temperaturmessen gemäß einem der Ansprüche 1 bis 9, dadurch gekennzeichnet, daß besagtes Umwandlungsmittel (23) die Umwandlung in einen Temperaturwert auf der Basis einer Verweistafel vornimmt.

11. Eine Vorrichtung zum Temperaturmessen gemäß einem der Ansprüche 1 bis 10, dadurch gekennzeichnet, daß sie weiter einen reaktionsresistenten Film (4 oder 5) umfaßt, der das lichtemittierende Element (2, 6 oder 7) gegen die Umgebung abdichtet; besagtes lichtemittierende Element (2, 6 oder 7) wird in besagter Umgebung eingesetzt, um Temperaturmessung zu bewirken.

## Revendications

1. Dispositif de mesure de la température d'un corps vivant, comprenant :
un élément d'émission de lumière (2, 6 ou 7) émettant de la lumière à une intensité qui dépend de la température lorsqu'il est exposé à de la lumière ;
un moyen d'exposition (8) servant à exposer ledit élément d'émission de lumière (2, 6 ou 7) à une lumière stabilisée ;
un moyen de réception de lumière (18) destiné à recevoir la lumière émise par l'élément d'émission de lumière (2, 6 ou 8) exposé ;
un moyen de conversion (23) servant à effectuer une conversion en une valeur de température à partir de l'intensité de la lumière émise qui a été reçue par ledit moyen de réception de lumière (18) ; et
un moyen de délivrance servant à délivrer l'information de température qui résulte de la conversion,
caractérisé en ce que l'élément d'émission de lumière (2, 6 ou 7) consiste en le complexe polypyridine-métal suivant : chlorure de ruthénium (II) tris(2,2′-bipyridine) et est fixé à l'aide d'un polymère.

2. Dispositif de mesure de la température d'un corps vivant selon la revendication 1, caractérisé en ce que la lumière produite par ledit moyen d'exposition (8) possède de préférence au moins une longueur d'onde qui excite ledit élément d'émission de lumière (2, 6 ou 7).

3. Dispositif de mesure de la température d'un corps vivant selon l'une des revendications 1 ou 2, caractérisé en ce que ledit moyen de réception de lumière (18) comporte un moyen de diffraction spectrale qui ne laisse passer que la lumière émise par ledit élément d'émission de lumière (2, 6 ou 7).

4. Dispositif de mesure de la température d'un corps vivant selon l'une quelconque des revendications 1 à 3, caractérisé en ce que la lumière reçue par ledit moyen de réception de lumière (18) possède un spectre de longueurs d'onde qui se trouve dans le voisinage de la position de crête de la lumière émise par ledit élément d'émission de lumière (2, 6 ou 7).

5. Dispositif de mesure de la température d'un corps vivant selon l'une quelconque des revendications 1 à 4, caractérisé en ce qu'une fibre optique (1) est utilisée comme véhicule par l'intermédiaire duquel ledit élément d'émission de lumière (2, 6 ou 7) est exposé par ledit moyen d'exposition (8).

6. Dispositif de mesure de température selon la revendication 5, caractérisé en ce que ledit élément d'émission de lumière (2, 6 ou 7) est fixé à une extrémité de ladite fibre optique (1).

7. Dispositif de mesure de température selon l'une quelconque des revendications 1 à 6, caractérisé en ce qu'une fibre optique (1) est utilisée comme véhicule par l'intermédiaire duquel la lumière émise par ledit élément d'émission de lumière (2, 6 ou 7) est reçue par ledit moyen de réception de lumière (18).

8. Dispositif de mesure de température selon la revendication 7, caractérisé en ce que ledit élément d'émission de lumière (2, 6 ou 7) est fixé à une extrémité d'une fibre optique (1).

9. Dispositif de mesure de température selon l'une quelconque des revendications 1 à 8, caractérisé en ce que ledit élément d'émission de lumière (2, 6 ou 7) est fixé à une extrémité d'une fibre optique (1), ledit moyen d'exposition (8) expose ledit élément d'émission de lumière (2, 6 ou 7) via ladite fibre optique (1), et ledit moyen de réception de lumière (18) reçoit, via ladite fibre optique (1), la lumière émise.

10. Dispositif de mesure de température selon l'une quelconque des revendications 1 à 9, caractérisé en ce que ledit moyen de conversion (23) effectue la conversion en une valeur de température à partir d'une table de recherche (24).

11. Dispositif de mesure de température selon l'une quelconque des revendications 1 à 10, caractérisé en ce qu'il comprend en outre une pellicule résistant aux réactions (4 ou 5) qui isole hermétiquement l'élément d'émission de lumière (2, 6 ou 7) vis-à-vis de l'environnement ; ledit élément d'émission de lumière (2, 6 ou 7) étant inséré dans ledit environnement pour effectuer une mesure de température.
